# EUROPEAN PATENT APPLICATION

(11) **EP 1 199 875 A2**
(43) Date of publication of application: **24.04.2002**
(21) Application number: 01124904.2
(22) Date of filing: 18.10.2001
(51) Int. Cl.: H04N 1/00, H04N 1/12

(54) **Original sheet reading apparatus**

(30) Priority: 19.10.2000 JP 2000319990
(71) Applicant: Sharp Kabushiki Kaisha, Osaka-shi Osaka (JP)
(72) Inventor: Suda, Takashi, Kashihara-shi, Nara (JP); Nakamura, Nobuyuki, Nara-shi, Nara (JP)
(74) Representative: Müller . Hoffmann & Partner Patentanwälte

(57) **Abstract**

An original sheet reading apparatus includes an original sheet reading station (2), a main roller (3), an original sheet feed guide (5) which is located in an original sheet conveyance path (1) in order to guide an original sheet (P) to the reading station (2), a sub-roller (6) which is located on the downstream side of the reading station (2) in the original sheet conveyance direction and an original sheet discharge guide (7) for guiding the original sheet (P) discharged from the sub-roller (6) toward the discharge side. The discharge guide (7) is located on the downstream side of the reading station (2) in the conveyance direction, in which the front edge (72) of the original sheet contact portion (71) is adapted so as to be positioned at a position being offset with respect to a straight line (B) that links the reading position (23) in the reading station (2) and the original sheet contact position (63) of the sub-roller (6).

## Description

### BACKGROUND OF THE INVENTION

### 1. Field of the Invention

The present invention relates to a reading apparatus for reading an original sheet, provided to various kinds of information and communication apparatus and imaging apparatus such as facsimile, scanner, printer, duplicator and the like.

### 2. Description of the Related Art

Various kinds of information and communication apparatus or imaging apparatus are provided with an original sheet reading station for reading a sheet-like original. The original sheet reading station is structured so that, for example, an original sheet is conveyed to the original sheet reading station by means of a main roller and a sub-roller, and the surface of the original sheet is read during the conveyance process. In the original sheet reading station of the related art, it is adapted so that the height of the original sheet contact portion of the main roller and the height of the sheet contact portion of the sub-roller are even with each other. Also, guide plates for guiding sheet are located in both under and above a sheet conveyance path, and it is adapted so that the surface of the sheet to be read is even with either the surface of the upper or lower sheet conveyance guide in order to prevent the sheet from being caught thereby.

However, since a predetermined gap is formed between the upper and lower guide plates, even when the above-described structure is given, the surface of the original sheet to be read sometimes floats during the process of reading. Particularly, in the latter half of the conveyance process when the rear end of the original sheet is released from the main roller which is located on the upstream side of the original sheet reading station, and the original sheet is being conveyed by the sub-roller alone that is located on the downstream side of the original sheet reading station, the rear end portion of the original sheet, which is free from any restrictions, floats or flutters resulting in an unstable positional relationship (gap) between the sheet surface and the original sheet reading station at the reading position. Consequently, it has failed heretofore to provide a high reading precision and hence a stable image quality is not attained.

To solve these problems, for example, in Japanese Unexamined Patent Publication JP-A 62-285840 (1987), a reading apparatus for a sheet-like original is proposed, in which an original sheet is pressed against an original sheet reading station (original sheet reading surface) by shifting the direction between the original sheet feed direction of the main roller and the sheet discharge direction of the sub-roller. Further, in Japanese Unexamined Patent Publication JP-A 64-70738 (1989), an imaging apparatus is disclosed, in which a holding member is provided on the upstream side of an original sheet reading station so as to prevent the sheet from floating or fluttering.

However, in the above conventional art, the structure is adapted so that the sheet feeding direction of the main roller is shifted from the sheet discharge direction, or floating of the original sheet is restrained on the upstream side of the original sheet reading station. Accordingly, in the latter half of the reading process, at the moment when the sheet has become free from the main roller or the holding member, the tension exerted to the sheet is varied, and hence it is failed to eliminate the occurrence of floating or fluttering of the original sheet due to the gap between the upper and lower guide plates.

### SUMMARY OF THE INVENTION

In view of the forgoing circumstances the object of the invention is to provide a reading apparatus for an original sheet in which the surface of the sheet to be read is held in a stable manner so that a higher degree of reading precision is attained.

The present invention provides an original sheet reading apparatus comprising:
an original sheet reading station for reading an original sheet;
a main roller located on an upstream side of the original sheet reading station along an original sheet conveyance direction in order to supply the original sheet to the original sheet reading station;
a sub-roller located on a downstream side of the original sheet reading station along the original sheet conveyance direction for conveying the original sheet which has passed through the original sheet reading station toward a sheet discharge side;
an original sheet feeding guide located in an original sheet conveyance path defined as a path formed at least between the main roller and the sub-roller for guiding the original sheet supplied by the main roller to the original sheet reading station; and
an original sheet discharge guide located on the downstream side of the original sheet reading station along the original sheet conveyance direction, for guiding the original sheet which has been discharged from the sub-roller, the original sheet discharge guide having an original sheet contact portion adapted so that a front end of the original sheet contact portion is set at a position where the front end is offset with respect to a straight line that links a reading position in the original sheet reading station and an original sheet contact position of the sub-roller.

According to the invention, due to the offset front end of the original sheet contact portion of the original sheet discharge guide, compelling force along the offset direction is exerted to the original sheet discharged from the sub-roller, and the rear portion of the original sheet released from the main roller, which receives the reaction force thereof caused by inherent rigidity of the original sheet is biased in the direction opposite to the offset direction, for example, toward the upper side or the lower side of the original sheet conveyance path. Accordingly, floating or fluttering of the sheet is restrained, and the sheet is held along the original sheet conveyance path stably resulting in reading with higher degree of precision.

In the invention it is preferable that the original sheet discharge guide is located on the downstream side of the sub-roller along the original sheet conveyance direction, extending toward a direction that intersects the sheet discharge direction at a right angle.

According to the invention, by interaction of the original sheet discharge guide, which is located at a position on the downstream side in the sheet-width direction of the sub-roller along the original sheet conveyance direction, it is possible for the compelling force in an offset direction to be exerted to the original sheet, which has been released from the sub-roller, in the direction of the sheet width thereof, and to prevent effectively the rear portion of the original to be read, which has been released from the main roller, from floating or fluttering.

In the invention it is preferable that the original sheet discharge guide is located in either an upper side or lower side of the original sheet conveyance path.

According to the invention, when the original sheet reading station is located under the original sheet conveyance path, it is possible to adapt the front end of the original sheet contact portion to be positioned in a way that the contact portion is offset upwardly with respect to a straight line that links the reading position of the original sheet reading station and the original sheet contact position of the sub-roller. Whereas, when the original sheet reading station is located above the original sheet conveyance path, it is possible to adapt the front end of the original sheet contact portion to be positioned in a manner that the contact end portion is offset downwardly with respect to a straight line that links the reading position in the original sheet reading station and the original sheet contact position of the sub-roller.

In the invention it is preferable that the original feed guide includes an upper guide plate which is located above the original sheet conveyance path, and a lower guide plate which is located under of the original sheet conveyance path.

In the invention it is preferable that when the original sheet reading station is located under the original sheet conveyance path, the front end portion of the upper guide plate is located at a position adjacent to the original sheet reading position, and the front end portion of the lower guide plate is located on the upstream side of the original sheet reading position in the original sheet conveyance direction.

In the invention it is preferable that when the original sheet reading station is located above the original sheet conveyance path, the front end portion of the upper guide plate is located on the upstream side of the original sheet reading position in the original sheet conveyance direction, and the front end portion of the lower guide plate is located at a position adjacent to the original sheet reading position.

### BRIEF DESCRIPTION OF THE DRAWINGS

Other and further objects, features, and advantages of the invention will be more explicit from the following detailed description taken with reference to the drawings wherein:
Fig. 1 is a view showing the structure of an original sheet reading apparatus according to an embodiment of the invention;
Fig. 2 is a perspective illustration of an original sheet discharge guide;
Fig. 3 is a perspective view showing another example of the original sheet discharge guide; and
Fig. 4 is a view showing the structure of an original sheet reading apparatus according to another embodiment of the invention.

### DETAILED DESCRIPTION OF THE PREFERRED EMBODIMENTS

Now, referring to the drawings, preferred embodiments of the original sheet reading apparatus are described in details as below:

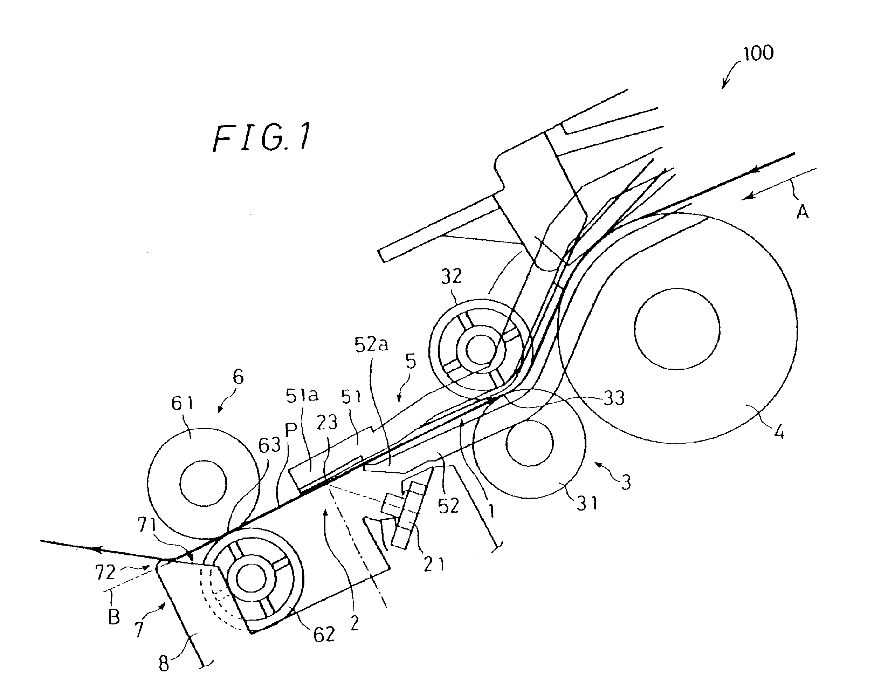

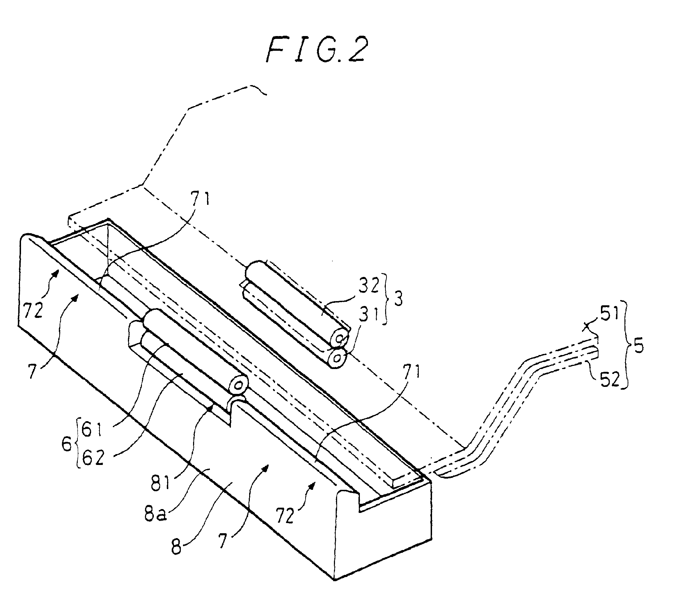

Fig. 1 shows the entire structure of an original sheet reading apparatus 100, and Fig. 2 is a perspective view illustrating the essential portion thereof. In these figures, the original sheet reading apparatus 100 includes an original sheet conveyance path 1, an original sheet reading station (hereafter described as reading station) 2, a main roller 3, a paper feed roller 4, an original sheet feed guide 5, a sub-roller 6 and an original sheet discharge guide 7. The original sheet conveyance path 1 is provided in order to convey an original sheet P to be read. The reading station 2, which is located under the conveyance path 1, has a light source 21 for exposing and reading means, which is not shown in the figures. The light emitted from the light source 21 is reflected at an original sheet reading position 23, and the reflected light therefrom is read by the reading means. The reading means is realized by means of a known art using a CCD image sensor or the like.

The main roller 3 is provided in order to supply the original sheet P to the reading station 2. The main roller 3 is comprised of a driving roller 31 to which the driving force is transmitted from a driving source (not shown in the figures) and an idler roller 32 that follows the rotation of the driving roller 31. The main roller 3 is located on the upstream side of the reading station 2 in the original sheet conveyance direction (indicated with an arrow A). The paper feed roller 4 is located at the uppermost stream of the original conveyance path 1, and supplies the original sheet P consecutively from an original sheet supply unit (not shown in the figures) to the original sheet conveyance path 1.

The original sheet guide 5 guides the original sheet P conveyed through the original sheet conveyance path 1 by means of the main roller 3 to the reading station 2. The original sheet feed guide 5 is comprised of an upper guide plate 51, which is located above the original sheet conveyance path 1, and a lower guide plate 52, which is located under the original sheet conveyance path 1. The sub-roller 6 conveys the original sheet P passed through the reading station 2 toward the discharge side. The sub-roller 6 is comprised of a driving roller 61 to which the driving force is transmitted from a driving source (not shown in the figures) and an idler roller 62 that follows the rotation of the driving roller 61. The sub-roller 6 is located on the downstream side of the reading station 2 in the original sheet conveyance direction.

Between these guide plates 51 and 52 described above, a gap of approximately 1-2mm is formed, which is necessary to allow the original sheet P to pass through. A front end portion 51a of the upper guide plate 51 is located at a position adjacent to the reading position 23. A front end portion 52a of the lower guide plate 52 is located at the upstream of the original sheet reading position 23 (hereafter described as reading position 23) in the original sheet conveyance direction. Due to this arrangement, it is enabled to carry out the reading of the original sheet P without interruption by the lower guide plate 52.

An original contact position 33 of the main roller 3 and an original contact position 63 of the sub-roller 6 are adapted to be even in height (on the same line) with the reading position 23. The reading position 23 is located at a position with a predetermined distance from the light source 21, where the light emitted from the light source 21 located in an immediately lower portion of the original conveyance path 1, is reflected by the surface of the original P to be read, which is held by the front end portion 52a of the lower guide plate 52 and the front end portion 51a of the upper guide plate 51.

The original sheet discharge guide 7 guides the original sheet P discharged from the sub-roller 6 so that the discharge direction thereof is shifted apart from the original sheet conveyance direction. The original sheet discharge guide 7 is located at a position adjacent to the sub-roller 6 on the downstream side thereof extending to the direction that intersects the original sheet conveyance direction (in the direction of width of the original sheet P) at a right angle. To describe more in detail, as shown in Fig. 2, the original sheet discharge guide 7 is regulated by a molded member 8 formed into a box in configuration with its upper portion opened, which is located under the original sheet conveyance path 1. The rear wall 8a of the molded member 8 is cut out into a concave configuration in the middle area thereof to form a cutout portion 81. In the cutout portion 81 of the rear wall 8a, the rear portion of the idler roller 62 is received. In the upper portion in the both sides of the cutout portion 81 of the rear wall 8a, the original sheet discharge guides 7 are formed respectively in the direction of the original sheet P, which intersects the original sheet discharge direction at a right angle.

The original sheet discharge guide 7 includes an original sheet contact portion 71 (hereafter described as contact portion 71) with which the original sheet P comes into contact. The contact portion 71 is formed so that the contact portion 71 is tapered upwardly. The front edge 72 of the contact portion 71 is formed into a curved surface so that the original sheet P, which comes into contact with the contact portion 71, is guided smoothly toward the discharge side without getting into a jam. The front edge 72 is adapted so as to be positioned being slightly offset upwardly with respect to the straight line B (indicated with a dotted broken line) that links the reading position 23 of the reading station 2 and the original sheet contact position 63 of the sub-roller 6.

By means of the structure as described above, the original sheet P, which is supplied into the original sheet conveyance path 1 by the paper feed roller 4, is conveyed by the main roller 3 to a predetermined position. After the sheet surface has been read by the reading station 2, the discharge direction is shifted slight-upwardly by the original sheet discharge guide 7 apart from the original sheet conveyance direction during the discharge process by the sub-roller 6.

Accordingly, even when the rear end of the original sheet P has been released from the main roller 3, the rear end of the original sheet P is biased toward the lower side, that is, to the lower guide plate 52. The floating or fluttering of the rear end of the original sheet P is restrained. Accordingly, the surface of the sheet is stably held on the reading position 23 and is read with higher degree of precision.

To describe more in detail, when the original sheet P discharged from the sub-roller 6 comes into contact with the front edge 72 of the contact portion 71, the front portion of the original sheet P receives push-up force generated upwardly by the original sheet discharge guide 7. Whereas, although it is not shown in the figures, the rear portion of the original sheet P, which has been released from the main roller 3 and is in a free state, receives the reaction force against the push-up force, and is biased downwardly, that is, in the direction opposite to the direction that the front edge 72 is offset. Being guided by the lower guide plate 52, the rear portion of the original sheet P is pressed against the front end portion 52a of the lower guide plate 52. Accordingly, the original sheet P is pressed against the front end portion 51a of the upper guide plate 51, and floating or fluttering of the original sheet surface on the reading position 23 is restrained, and the original sheet surface is read with higher of degree precision.

Furthermore, since the original sheet P has inherent rigidity, when a push-up compelling force generated upwardly by the original sheet discharge guide 7 is exerted to the original sheet P, due to the reaction force thereof, on the original sheet P on the upstream side of the sub-roller 6 in the original sheet conveyance direction, a biased force is generated downwardly. Therefore, even at a moment when the rear portion of the original sheet P is released from the main roller 3 and gets into a free state, without depending on the gap between the guide plates 51 and 52, the rear portion of the original sheet P is biased against the front end of the lower guide plate 52. Accordingly, as described above, the rear portion of the original sheet P is held stably on the reading position 23.

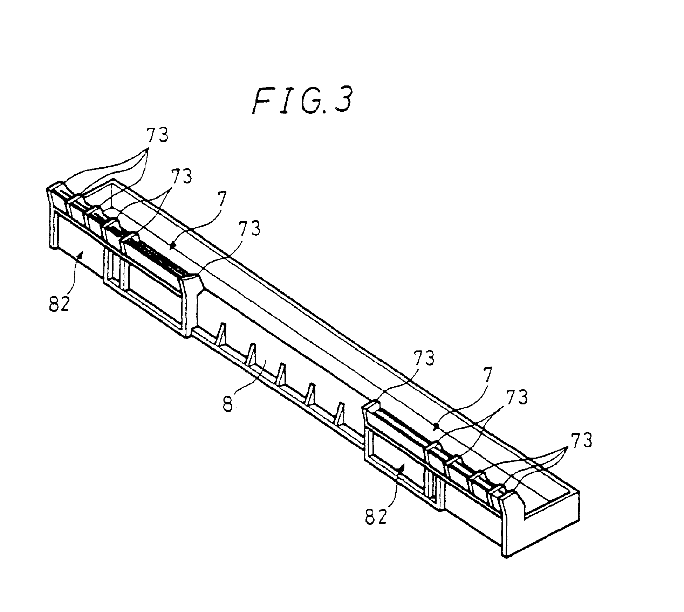

Still further, in the original sheet discharge guide 7, as shown in Fig. 3, on the rear walls 82 of the molded member 8, which is formed into a box shape with an open upper portion, a plurality of ribs 73 may be located vertically at predetermined intervals in the original sheet conveyance direction. By providing the ribs 73 as described above, the resistance against the original sheet P is reduced so as to be guided and discharged more smoothly. In this case, it is allowable when the ribs 73 has, as shown in Fig.1, an original sheet contact portion, which is tapered upwardly, and the front edge thereof is adapted so as to be positioned being slightly offset upwardly with respect to the straight line B (indicated with the dotted broken line) that links the reading position 23 of the reading station 2 and the contact position 63 of the sub-roller 6.

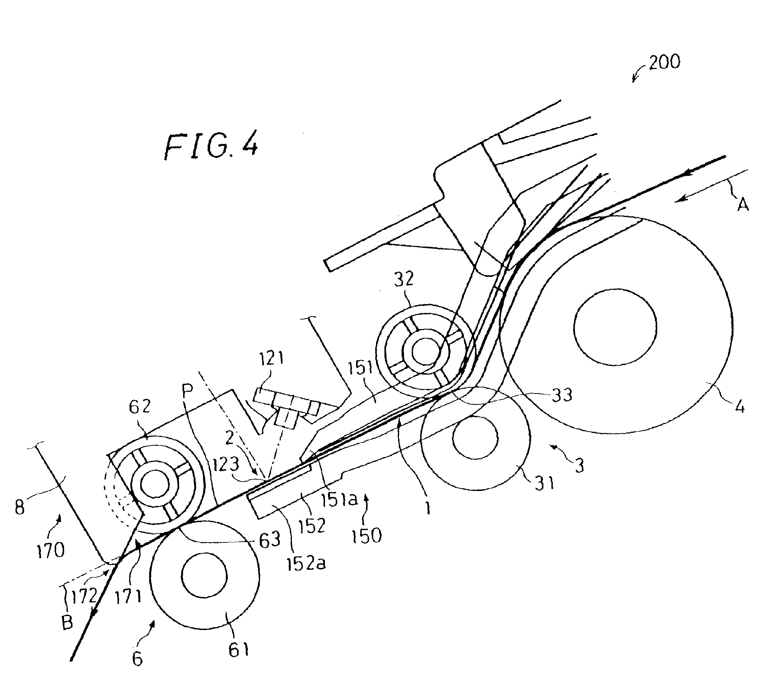

Fig. 4 is a view showing the entire structure of an original sheet reading apparatus 200 according to another embodiment of the invention. In the description, the constituents that are identical with those described in the above embodiment of the invention will be given with the same reference numerals and the description thereof will be omitted. In the original sheet reading apparatus 200, a light source 121 for irradiating light beam is located in an upper portion of the original sheet conveyance path 1. A reading station 2 is located above the original sheet conveyance path 1. Accordingly, an original sheet guide 170 is located in an upper portion of the original sheet conveyance path 1. The front end 172 of an original sheet contact portion 171 is adapted so as to be positioned being slightly offset downwardly with respect to the straight line B (indicated with a dotted broken line) that links an original sheet reading position 123 (hereafter referred as reading position 123) of the reading station 2 and an contact position 63 of a sub-roller 6.

Further, an original sheet feed guide 150 is comprised of an upper guide plate 151 which is located in the upper side of the original sheet conveyance path 1, and a lower guide plate 152, which is located in the lower side of the original sheet conveyance path 1. Front end portion 151a of the upper guide plate 151 is located on the upstream side of the reading position 123 along the original sheet conveyance direction. Front end portion 152a of the lower guide plate 152 is located at a position adjacent to the reading position 123. By this means, it is enabled to carry out the reading of an original sheet P without being interrupted by the upper guide plate 151.

Between these guide plates 151 and 152 described above, a gap of approximately 1-2mm is formed, which is necessary to allow the original sheet P to pass through. The original contact position 33 of the main roller 3 and the original contact position 63 of the sub-roller 6 are adapted to be even in height (on the same line) with the reading position 123. The reading position 123 is located with a predetermined distance from the light source 121 at a position where the light emitted from the light source 121 located in an immediately upper portion of the original sheet conveyance path 1 is reflected by the surface of the original sheet P to be read, which is held by the front end portion 151a of the lower guide plate 151 and the front end portion 152a of the upper guide plate 152.

By means of the structure as described above, the original sheet P discharged from the sub-roller 6 receives push-down force generated downwardly by the original sheet discharge guide 170. Although it is not shown in the figure, the rear portion of the original sheet P, which has been released from the main roller 3 and is in a free state, is biased upwardly and is guided by the upper guide plate 151 and pressed against the front-end portion 151a of the upper guide plate 151. Accordingly, the original sheet P is pressed to the front portion 152a of the lower guide plate 152, and floating or fluttering of the original sheet surface on the reading position 123 is restrained, and the sheet surface is read with higher degree of precision.

That is, when a push-down compelling force generated downwardly by the original sheet discharge guide 7 is exerted to the original sheet P, by means of the reaction force thereof, on the upstream side of the sub-roller 6 in the original sheet conveyance direction, a biased force is generated downwardly. Therefore, even at a moment when the rear portion of the original sheet P is released from the main roller 3 and gets into a free state, without depending on the gap between the guide plates 151 and 152, the rear portion of the original sheet P is biased against the front end of the lower guide plate 151. Accordingly, as described above, the rear portion of the original sheet P is held stably at the reading position 123. Further, it is needless to say that, in this case also, as shown in Fig. 3, rear walls 82 of a molded member 8 maybe structured so that a plurality of ribs 73 are located vertically at a predetermined intervals in the original sheet conveyance direction.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. An original sheet reading apparatus (100, 200) comprising:
an original sheet reading station (2) for reading an original sheet (P);
a main roller (3) located on an upstream side of the original sheet reading station (2) along an original sheet conveyance direction in order to supply the original sheet (P) to the original sheet reading station (2);
a sub-roller (6) located on a downstream side of the original sheet reading station (2) along the original sheet conveyance direction for conveying the original sheet (P) which has passed through the original sheet reading station (2) toward a sheet discharge side;
an original sheet feeding guide (5, 150) located in an original sheet conveyance path (1) defined as a path formed at least between the main roller (3) and the sub-roller (6) for guiding the original sheet (P) supplied by the main roller (3) to the original sheet reading station (2); and
an original sheet discharge guide (7, 170) located on the downstream side of the original sheet reading station (2) along the original sheet conveyance direction, for guiding the original sheet (P) which has been discharged from the sub-roller (6), the original sheet discharge guide (7, 170) having an original sheet contact portion (71, 171) adapted so that a front end (72, 172) of the original sheet contact portion (71, 171) is set at a position where the front end (72, 172) is offset with respect to a straight line that links a reading position (23, 123) in the original sheet reading station (2) and an original sheet contact position (63) of the sub-roller (6).

2. The original sheet reading apparatus (100, 200) of claim 1, wherein the original sheet discharge guide (7, 170) is located on the downstream side of the sub-roller (6) along the original sheet conveyance direction, extending toward a direction that intersects the sheet discharge direction at a right angle.

3. The original sheet reading apparatus (100, 200) of claim 1 or 2, wherein the original sheet discharge guide (7, 170) is located in either an upper side or lower side of the original sheet conveyance path (1).

4. The original sheet reading apparatus of any one of claims 1 to 3, wherein the original feed guide (5, 150) includes an upper guide plate (51, 151) which is located above the original sheet conveyance path (1), and a lower guide plate (52, 152) which is located under of the original sheet conveyance path (1).

5. The original sheet reading apparatus (100) of claim 4, wherein when the original sheet reading station (2) is located under the original sheet conveyance path (1), the front end portion (51a) of the upper guide plate (51) is located at a position adjacent to the original sheet reading position (23), and the front end portion (52a) of the lower guide plate (52) is located on the upstream side of the original sheet reading position (23) in the original sheet conveyance direction.

6. The original sheet reading apparatus (200) of claim 4, wherein when the original sheet reading station (2) is located above the original sheet conveyance path (1), the front end portion (151a) of the upper guide plate (151) is located on the upstream side of the original sheet reading position (123) in the original sheet conveyance direction, andthe front endportion (152a) of the lower guide plate (152) is located at a position adjacent to the original sheet reading position (123).
